(19) Europäisches Patentamt
European Patent Office
Office européen des brevets

(11) Publication number: **0 143 315**
**A1**

# (12) EUROPEAN PATENT APPLICATION

(21) Application number: **84112582.6**

(22) Date of filing: **18.10.84**

(51) Int. Cl.⁴: **C 09 G 1/16**, C 08 L 83/08

(30) Priority: **27.10.83 US 545906**

(43) Date of publication of application: **05.06.85 Bulletin 85/23**

(84) Designated Contracting States: **BE CH DE FR GB IT LI NL**

(71) Applicant: **GENERAL ELECTRIC COMPANY, 1 River Road, Schenectady New York 12305 (US)**

(72) Inventor: **Simoneau, Edward Thomas, 153 Main Street, Greenwich New York 12834 (US)**
Inventor: **Thimineur, Raymond Joseph, 162 Willow Lane, Scotia New York 12302 (US)**
Inventor: **Traver, Frank John, 1 Downey Road, Troy New York 12180 (US)**

(74) Representative: **Schüler, Horst, Dr. et al, Kaiserstrasse 41, D-6000 Frankfurt/Main 1 (DE)**

## (54) Durable silicone emulsion polish.

(57) Aminofunctional silicone emulsions detergent-resistant provide polishes and dressings which form protective, glossy coatings on a wide variety of substrates. Incorporation of modifying agents including polydimethylsiloxane oils, glycerin and UV absorbing agents provide emulsions which exhibit improved ease of application, glossiness, shelf stability and resistance to light degradation.

EP 0 143 315 A1

10333-60SI-00688

# DURABLE SILICONE EMULSION POLISH

Patent Application of: Edward Thomas Simoneau, Raymond Joseph Thimineur and Frank John Traver

## BACKGROUND OF THE INVENTION

This invention relates to silicone emulsion polishes. More particularly, it relates to silicone emulsion polishes and dressings which form detergent-resistant, protective, glossy coatings on substrates to which they are applied.

Silicone emulsion polishes and dressings, commonly used to improve the appearance of and to protect household products, luggage, fabrics, marine and auto vinyl, sporting goods, etc., are favored for their glossiness and ease of application; however, they lack durability, especially after detergent washing, and must be frequently reapplied. Aminofunctional silicone emulsion polishes exhibiting detergent resistance are shown in U.S. Patents 3,960,575 (Martin), 4,246,029 (Sanders, Jr.), and 4,247,330 (Sanders, Jr.) ——— ——— (which patents ——— are hereby incorporated by reference),

but improved protection of common substrates such as vinyl, improved storage life, and easier application are still desired.

It has now been discovered that aminofunctional silicone polymer emulsions containing blends of polydimethylsiloxane oils, glycerin, or ultraviolet radiation absorbers show significant improvement in glossiness, ease of application, shelf life and resistance to surface degradation from exposure to sunlight.

## SUMMARY OF THE INVENTION

Accordingly, it is an object of the present invention to provide an aminofunctional emulsion polish which is easy to apply, detergent resistant, and imparts good gloss to substrates to which it is applied.

It is a further object of the present invention to provide a silicone emulsion polish which is shelf stable.

It is a further object of the present invention to provide a silicone emulsion polish which protects the surface to which it is applied from degradation from exposure to sunlight.

These and other objects are provided herein by an aminofunctional silicone emulsion comprising an aqueous emulsion of

(a) an aminofunctional silane-terminated diorganopolysiloxane of the formula:

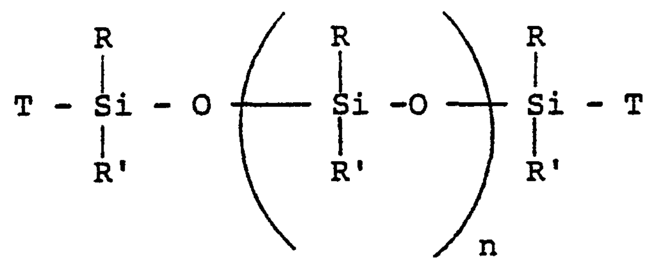

wherein R and R' are, independently, monovalent hydrocarbon radicals of from 1 to 8 carbon atoms, T is hydroxyl or a terminal aminofunctional group derived from the hydrolysis and condensation of such a hydroxyl group and a silane of the formula $(RO)_3SiR''Y_a$, wherein each R is a monovalent hydrocarbon radical of from 1 to 8 carbon atoms, R" is a divalent aliphatic hydrocarbon radical containing from 3 to 5 carbon atoms and having a valence of a + 1, a is an integer equal to 1, 2 or 3, and Y is a monovalent radical attached to R" by a carbon-nitrogen bond and composed of hydrogen atoms, nitrogen atoms and up to 8 carbon atoms and containing at least one amine group, the ratio of carbon atoms to nitrogen atoms in Y being less than about 6:1;

(b) an emulsifier or combination of emulsifiers; and

(c) at least one member selected from the group consisting of

(i) a polydimethylsiloxane oil, or a blend of polydimethylsiloxane oils, having a viscosity of about 50 to 60,000 cstk.,

(ii) an amount of glycerin effective to enhance the shelf stability of said composition, and

(iii) an ultraviolet radiation absorbing compound.

DETAILED DESCRIPTION OF THE INVENTION

The aminofunctional silicone emulsions of the present invention are prepared by combining an aminofunctional silane-endstopped diorganopolysiloxane fluid, emulsifier(s), water, and a modifier selected from polydimethylsiloxane oils, glycerin and ultraviolet radiation absorbing compounds, and then blending or milling the combined ingredients to form stable silicone emulsions which are durable and easily applied to smooth surfaces or fabrics and which will exhibit improved coating characteristics, shelf life or protection of the underlying surfaces, depending on the modifier used.

The silanol-terminal or aminofunctional diorganopolysiloxanes employed in the present invention are typically prepared by acid- or base-catalyzed polymerization of cyclic polysiloxane monomers of the general formula: $(RR'SiO)_{3-9}$, in which the R and R' groups may be, independently, hydrogen or a hydrocarbon or substituted hydrocarbon group. For the purposes herein, the substituents will preferably be monovalent hydrocarbon groups of from 1 to 8 carbons, such as methyl, ethyl, isopropyl, vinyl, allyl, and the like. Most preferred for R and R' is methyl.

Blending cyclic polysiloxane monomers, such as octamethylcyclotetrasiloxane, and water in the presence of a hydrolysis catalyst, preferably KOH, and heating the mixture if necessary to begin polymerization, yields a silanol-endstopped polysiloxane. The terminal hydroxyl group will undergo a condensation reaction with a subsequently added aminofunctional silane, for example 3-aminopropyltrimethoxysilane, N-2-aminoethyl-3-aminopropyltrimethoxysilane, and the like, to yield polymers with terminal aminofunctional silane groups.

The aminofunctional silanes suitable for preparing the aminofunctional diorganopolysiloxane fluids described above have the general formula $(RO)_3SiR''Y_a$, in which R is a monovalent hydrocarbon radical of from 1 to 8 carbon atoms, R" is an aliphatic hydrocarbon radical containing from 3 to 5 carbon atoms and having a valence of a + 1, where a is an integer from 1 to 3, inclusive, and Y is a monovalent radical attached to R" by a carbon-nitrogen bond and composed of hydrogen atoms, nitrogen atoms and up to 8 carbon atoms and containing at least one amine group, the ratio of carbon atoms to nitrogen atoms in Y being less than about 6:1. Examples of silanes included in the above formula are discussed in U.S. 3,350,349 (Hyde) and U.S. 2,971,864 (Speier), which are hereby incorporated by reference. Preferred diorganopolysiloxanes contemplated herein will have the general formula,

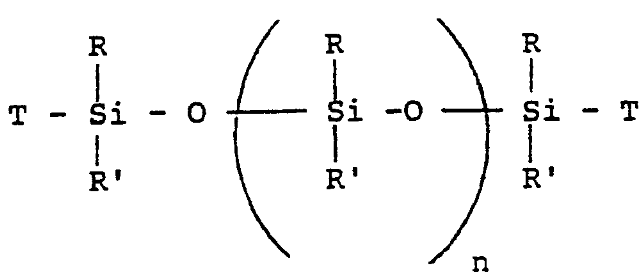

wherein R and R' are, independently, monovalent hydrocarbon radicals having 1 to 8 carbon atoms, T is a silicon-bonded hydroxyl terminal group or a monovalent aminofunctional terminal group derived via hydrolysis and condensation reaction (such as described above) between a terminal silanol group and an aminofunctional silane, producing an aminofunctional silane-endstopped polymer, and wherein n is a positive integer sufficient to provide polymer fluids having a viscosity in the range of about 50 to 100,000 centipoise at 25°C.

Emulsification of the diorganopolysiloxanes is assisted by an emulsifying surfactant (emulsifier) which will promote dispersion of the diorganopolysiloxanes and other ingredients in an aqueous phase. Many suitable emulsifiers and combinations of emulsifiers will suggest themselves to persons skilled in the art from the discussion herein of the other ingredients, however, for the purposes of the present invention, alkylphenoxypolyoxyethylene glycol surfactants, such as octylphenoxypolyoxyethylene glycol (e.g., TRITON® X45, X100, X405; Rohm & Haas), nonylphenoxypolyoxyethylene glycol (Igepal® CO850; GAF), and the like, and complex quaternary ammonium salts, such as methylpolyoxyethylene(15)cocoammonium chloride (5%, Ethoquad® C/25; Armak) and dimethylsoyaammonium chloride (74%, Arquad® 2S-75; Armak), are preferred. Emulsifiers generating free acid are to be avoided as they tend to neutralize the amine function of the diorganopolysiloxanes. Combinations of emulsifiers may also be used.

The modifying agents contemplated herein include silicone oils, glycerin, and ultraviolet radiation absorbing compounds, each of which has been discovered to give the compositions of the present invention improved properties.

The silicone oils employed in the present invention are trimethyl-endstopped polydimethylsilicone fluids having a viscosity in the range of 50 to 60,000 cps at 25°C. Adding the oils to the aminofunctional polysiloxanes described previously improves the gloss and ease of application of emulsion polishes based on the present compositions. It has also been discovered that after aging about three days in the emulsion, the polydimethylsiloxane oils become fully incorporated into the structure of the diorganopolysiloxane emulsion. Thus the emulsion polishes of the present invention are able to retain their gloss longer after application; and, with the detergent resistance imparted by the aminofunctional polysiloxanes, a high-gloss coating can be retained through several washings without constant reapplication.

It has been discovered herein that adding glycerin, $C_3H_5(OH)_3$, improves the shelf life of the compositions described herein. Glycerin also serves to stabilize the emulsion, especially at low temperatures, giving the present emulsions superior freeze-thaw properties. Stable emulsions according to the present invention have been observed after exposure to temperatures as low as -25° to -40°C.

The ultraviolet radiation absorbing compounds used in accordance with the present invention must be soluble in, and otherwise compatible with, the diorganopolysiloxane emulsions described previously. These include a class of substituted hydroxybenzophenones, such as 2-hydroxy-4-methoxy benzophenone, 2,4-dihydroxybenzophenone and 2,2'-dihydroxy-4-methoxy benzophenone. Particularly preferred compounds are silyl adducts of hydroxybenzophenone compounds, which have the general formula,

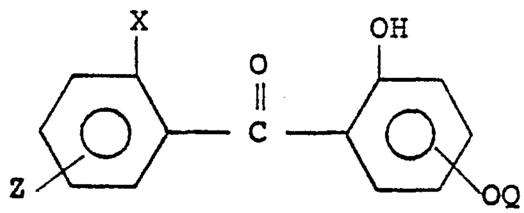

wherein X is H or OH, Z is H, OH, OQ or OW, where Q is $-CH_2(CH_2)_xSi(R^3)_y(OR^4)_z$, W is $-C_mH_{2m+1}$, where y is equal to 0, 1 or 2, z is equal to 1, 2 or 3, y+z=3, $R^3$ is alkyl having 1 to 6 carbon atoms, $R^4$ is alkyl or alkanoyl having 1 to 6 carbon atoms, x is equal to 0, 1 or 2, and m is equal to 1 to 18, inclusive. A detailed description of such compounds is found in U.S. 4,374,674 (Ashby et al.), incorporated herein by reference. 4-(3-triethoxysilyl) propoxy-2-hydroxybenzophenone is most preferred.

The amounts of the modifying additives described herein will vary widely depending on the particular additive, and the exact combination of properties desired by the user. However, by way of illustration, in embodiments that contain the above-described polydimethylsiloxane oils, amounts of up to about 85 weight percent, preferably about 20 to about 55 weight percent, are contemplated.

In embodiments where glycerin is a component, amounts of glycerin from about 0.5 to 5 weight percent, preferably about 1-3 weight percent, based on the total composition are contemplated.

Any amount of ultraviolet radiation screening compound effective to prevent degradation of the underlying substrate to which the present compositions are applied is contemplated. For the purposes of the present invention, amounts ranging from about 0.1 to about 5 weight percent, based on the total compostion, are contemplated.

The aminofunctional silicone emulsions of the present invention may be used as components in silicone emulsion polish compositions. Suitable polishes according to the present invention are typically prepared by combining an emulsion with, for example, an aqueous auto polish base which contains perfumes, odor masks, dispersants, suspending agents, cleaning abrasives, and the like. The final polish composition typically contains 1-60 percent by weight of the modified aminofunctional silicone emulsion of the present invention, the rest comprising polish base. Alternatively, the modified aminofunctional silicone emulsion may simply be cut to less than about 20% silicone solids by weight with water or any other of a number of vehicles familiar to persons skilled in this art. The polishes containing the presently described aminofunctional silicone emulsions may be easily applied to a wide range of solid substrates, including fabrics, painted surfaces, and all of the previously mentioned substrates, to give protective glossy finishes.

In preparing the silicone emulsion polishes of the present invention, the exact formulation will depend on several factors including type of polysiloxane fluids used, the nature of the aminofunctionality, and the exact amount and type of modifier(s) employed. Simple experimentation to match the polish formulation to a given set of conditions is contemplated.

The polish formulations may contain additional components to lend the polishes desirable characteristics without significantly affecting their performance as polishes. These include, for instance, thickeners, antifoaming agents, antibacterial agents, solvents, pigments, and the like.

In order that persons skilled in this art may better understand the practice of this invention, the following examples are provided by way of illustration, and not by way of limitation.

EXAMPLES 1-4

Four emulsions according to the present invention were prepared as follows:

Sample 1

1692 parts by weight (pbw) deionized water, 120 pbw octylphenoxypolyoxyethylene glycol emulsifier (Triton® X405; Rohm & Haas), 30 pbw methylpolyoxyethylene (15) cocoammonium chloride (Ethoquad® C/25; ARMAK Company) and 7.1 pbw KOH pellets were added to a stainless steel reaction vessel, then blended to form an aqueous solution. 1059 pbw of octamethylcyclotetrasiloxane (dimethyl tetramer) were added and the mixture homogenized at 6000 psig to give 2400 pbw of a homogeneous emulsion.

The emulsion was heated to 88°C for 6 hours to promote polymerization, then cooled to 55°C. 1000 pbw of the emulsion were removed and mixed with a blend of 5 pbw octylphenoxypolyoxyethylene glycol (Triton® X100; Rohm & Haas) and 10 pbw of 4-(3-triethoxysilyl)proproxy-2,4-dihydroxybenzophenone. Polymerization continued at 35°C for a half hour, at which time a blend of 10 pbw 3-(2-aminoethyl) aminopropyltrimethoxy silane and 2 pbw of Triton® X100 were added. The emulsion was allowed to polymerize at 35°C for a half hour, when 2.5 pbw acetic acid were added to neutralize the KOH. The final emulsion had a light yellow cast.

Sample 2

To an aminofunctional emulsion prepared as Sample 1, there was added additional acetic acid stoichiometrically: a mol of acetic acid was added for each mol of 3-(2-aminoethyl) aminopropyltrimethoxy silane previously incorporated, to yield the amine acid salt. The final emulsion was milky white and contained 36.1% total solids.

Sample 3

Following the general procedure described for Sample 1, an emulsion was preapred using 1050 pbw of dimethyl tetramer, 190 pbw Trimethylcocoammonium chloride (50% Active) emulsifier (Arquad® C/50; ARMAK Company), 1692 pbw water, 6.8 pbw KOH pellets and 45 pbw Triton® X405. 2400 pbw of the homogenized solution were heated for 6 hours at 65°C to polymerize, then cooled to 55°C. 1000 pbw of the emulsion were mixed with a blend of 5 pbw Triton® X100 and 10 pbw of the silylated hydroxybenzophenone UV screen used in Sample 1. Polymerization was continued at 55°C for a half hour.

A blend containing 10 pbw of 3-(2-aminoethyl)aminopropyltrimethoxy silane and 2 pbw Triton® X100 was added and polymerized an additional half hour at 55°C. KOH was neutralized with 2.4 pbw acetic acid. The final emulsion had a deep yellow cast.

Sample 4

A stoichiometric amount of acetic acid was added to the Sample 3 emulsion so that the amine acid salt was formed in half the available amine. The resultant emulsion was off-white and contained about 34.6% total solids.

Polish formulations were prepared by blending the aminofunctional emulsions by cutting the silicone solids content to about 10%-20% with added water and adding additional emulsifier (Triton® X100). The polish formulations were applied to painted substrates and cured to a film exhibiting good gloss, good detergent resistance, and low migration. The integral UV absorber remained in the cured film.

EXAMPLES 5-9

Five emulsions according to the present invention were prepared as follows:

Sample 5

315 parts by weight (pbw) of a 3-(2-aminoethyl) aminopropyltrimethoxy silane-stopped polydimethylsiloxane fluid, 375 pbw of a 1000 cstk. polydimethylsiloxane oil and 810 pbw of a 100 cstk. polydimethylsiloxane oil were added to a stainless steel breaker and the blend warmed to 43°C. An emulsifier blend containing 9 pbw octylphenoxypolyoxyethylene glycol (Triton® X45; Rohm & Haas ), 94 pbw Triton X405, 38 pbw glycerin, 8 pbw formalin, and 149 pbw deionized water was prepared and made uniform, then added slowly to the oil blend with

agitation and while maintaining the temperature at 43°C. The uniform mixture was then passed through a Manton Gaulin colloid mill (22 mil gap) at 20 psig $N_2$ pressure 1546 pbw of a paste were collected and disbursed in 605 pbw dionized water. The resultant emulsion solids measured at 150°C was 63.2% the viscosity was 1240 cps (RVF Brookfield #3 spindle at 20 rpm). This emulsion contained 3% emulsifier solids and 1.5% glycerin.

Sample 6

An emulsion was prepared as in Sample 5, except 315 pbw of the aminofunctional polysiloxane, 375 pbw of the 1000 cstk. polysiloxane oil, 810 cps of the 100 cstk. oil 13.5 pbw of Triton® X45, 142 pbw of Triton® X405, 138 pbw water and 5 pbw formalin, were used to prepare the paste. 1545 pbw of paste were disbursed in 700 pbw water and the solution milled at 35°C at 30 psig using a 25 mil gap. Solids were 60.2% and the viscosity was 2450 cps.

Sample 7A-E

To portions of the Sample 6 emulsion was added, individually, 1% (Sample 7A), 2% (Sample 7B), 3% (Sample 7C), 4% (Sample 7D) and 5% (Sample 7E) of glycerin, which was then disbursed by shaking.

Sample 8

An emulsion was prepared exactly as in Sample 5, except only 2.5% emulsifier solids (0.23% Triton® X45 and 2.36% Triton® X405) and 2% glycerin were utilized. The solution was held at 43°C for 3 hours prior to colloid milling at 20 psig with 13 mil gap. 1555 pbw paste were disbursed in 630 pbw water to yield an emulsion having 62% total solids and a viscosity of 1150 cps.

Sample 9

Following the procedure of Sample 5, an emulsion was prepared containing 12.6% of the aminofunctional polysiloxane fluid, 15% of the 1000 cstk. polysiloxane oil, 32.4% of the 100 cstk. oil, 3% glycerin and 2.5% emulsifier solids. 1588 parts by weight of paste were collected in 630 parts by weight water and milled at 18 psig at 43°C with a 12 mil gap to yield a 1010 cps emulsion having 63.7% total solids.

Polish formulations were prepared from Samples 5,6,8 and 9 with an industrial aqueous auto polish base containing perfume, odor masks, dispersants, suspending agents and polishing abrasives. With 6.5 parts by weight of each of Samples 5,6,8 and 9 were combined 93.5 parts by weight of the polish base.

The polish formulations were applied to painted surfaces and all coatings exhibited good gloss, covered blemishes well and showed good resistance to 3 detergent washings. Samples prepared as Sample 6 but containing no 1000 cstk. polydimethylsiloxane oil also exhibited good polish properties but did not give as good a depth of gloss as the other samples containing a blend of polysiloxane oils.

In freeze-thaw testing, it was found that emulsion Sample 5-9 containing less than 2% glycerin would separate and break after exposure to -45°C for 16 hours followed by thawing (one cycle). However, all the samples containing glycerin were stable through 16 hours freeze at -12°C and 64 hours thawing. Sample 6 (no glycerin) failed the -12°C test, splitting out free oil as it thawed; Samples 5 and 8 passed 3 cycles at -12°C.

Polish formulations prepared as above from Samples 5-9 (using the auto polish base) containing glycerin passed freeze-thaw testing of -12°C for 16 hours and 25°C for 8 hours, retaining good texture and appearance. Polish containing no glycerin appeared to coagulate, split out free oil, thicken and lose its good texture-appearance quality, making its unsuitable as a polish.

Many variations in the foregoing embodiments are obviously possible in view of the present disclosure, however, all such incidental changes are within the intended scope of the following claims.

CLAIMS

1. An aminofunctional silicone emulsion composition comprising an aqueous emulsion of

(a) an aminofunctional silane-terminated diorganopolysiloxane of the formula

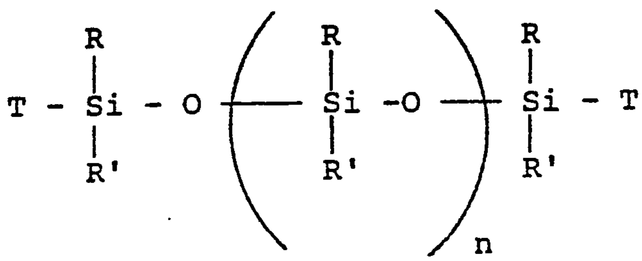

wherein R and R' are, independently, monovalent hydrocarbon radicals of from 1 to 8 carbon atoms, n is a positive integer sufficient to provide a polymer of from 50 to 100,000 cps at 25°C, and T is hydroxyl or a terminal aminofunctional group derived from the hydrolysis and condensation of a hydroxyl group with a silane of the formula $(RO)_3SiR''Y_a$, wherein each R is a monovalent hydrocarbon radical of from 1 to 8 carbon atoms, R" is a divalent aliphatic hydrocarbon radical containing from 3 to 5 carbon atoms and having a valence of a + 1, a is an integer equal to 1,2 or 3, and Y is a monovalent radical attached to R" by a carbon-nitrogen bond and composed of hydrogen atoms, nitrogen atoms and up to 8 carbon atoms and containing at least one amine group, the ratio of carbon atoms to nitrogen atoms in Y being less than about 6:1;

(b) an emulsifier or combination of emulsifiers; and

(c) at least one member selected from the group consisting of

(i) a polydimethylsiloxane oil, or a blend of polydimethylsiloxane oils, having a viscosity of about 50 to 60,000 cstk.,

(ii) an amount of glycerin effective to enhance the shelf stability of said composition, and

(iii) an ultraviolet radiation absorbing compound.

2. A composition as defined in Claim 1, wherein said emulsifier component (b) is selected from alkylphenoxypolyoxyethylene glycols or  uaternary ammonium salts.

3. A composition as defined in Claim 2, wherein the modifier component (c) comprises a blend of polydimethylsiloxane oils and a small amount of glycerin.

4. A composition as defined in Claim 3, wherein the polysiloxane oils of said blend have viscosities less than about 1000 cstk. and said glycerin is present in amounts of about 0.5 to 5 weight percent, based on the total weight of the composition.

5. A composition as defined in Claim 2, wherein the modifier component (c) comprises an ultraviolet radiation screening compound of the formula

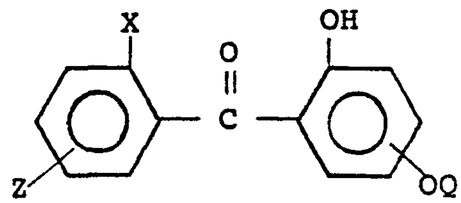

wherein X is H or OH, Z is H, OH, OQ or OW, where Q is $-CH_2(CH_2)_xSi(R^3)_y(OR^4)_z$, W is $C_mH_{2m+1}$ where y is eqaul to 0, 1 or 2, z is equal to 1, 2 or 3, y + z = 3, $R^3$ is alkyl having 1 to 6 carbon atoms, $R^4$ is alkyl or alkanoyl having 1 to 6 carbon atoms, x is equal to 0, 1 or 2, and m is equal to 1 to 18, inclusive.

6. A composition as defined in Claim 5, wherein said ultraviolet radiation absorbing compound is present in amounts of from about 0.1 to 5 weight percent, based on the total composition.

7. A silicone emulsion polish composition comprising from about 1 to 60 parts per hundred by weight of the composition of Claim 1, the balance comprising an aqueous polish base.

8. A silicone emulsion polish composition as defined in Claim 7, wherein said aqueous polish base comprises a homogeneous mixture of water, perfumes, odor masks, dipersants, suspending agents and cleaning abrasives.

9. An aminofunctional silicone emulsion composition comprising an aqueous emulsion of

(a) an aminofunctional silane-terminated diorganopolysiloxane of the formula

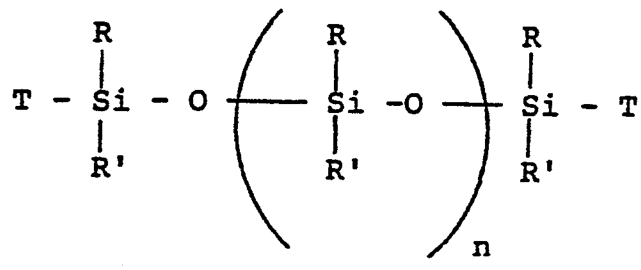

wherein R and R' are, independently, monovalent hydrocarbon radicals of from 1 to 8 carbon atoms, n is a positive integer such that the viscosity of the polysiloxane is in the range of 50 to 100,000 cps at 25°C, and T is hydroxyl or a terminal aminofunctional group derived from hydrolysis and condensation of a terminal silanol group with a silane selected from 3-aminopropyltrimethoxysilane and N-2-aminoethyl-3-aminopropyltrimethoxysilane;

(b) an emulsifier or combination of emulsifiers selected from octylphenoxypolyoxyethylene glycol and nonylphenoxypolyoxyethylene glycol; and

(c) at least one member selected from the group consisting of

(i) polydimethylsiloxane oils having viscosities in the range of 50 to 60,000 cstk., or blends of such oils;

(ii) from about 0.5 to 5 percent by weight of glycerin, based on the total composition; and

(iii) from about 0.1 to about 5 percent by weight, based on the total composition, of an ultraviolet radiation absorbing compound selected from the group consisting of 2-hydroxy-4-methoxy benzophenone, 2,4-dihydroxybenzophenone, 2,2'-dihydroxy-4-methoxy benzophenone, and silyl hydroxybenzophenone adducts of the formula

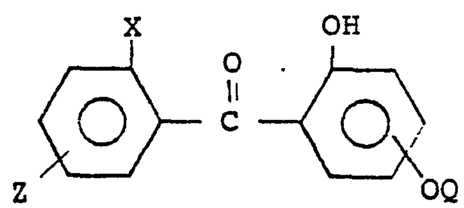

,

wherein X is H or OH, Z is H, OH OQ or OW, Q is $-CH_2(CH_2)_xSi(R^3)_y(OR^4)_3$, W is $-C_mH_{2m+1}$, where x is 0,1 or 2, y is 0,1 or 2, z is 1, 2 or 3, y+z=3, $R^3$ is alkyl having 1 to 6 carbon atoms, $R^4$ is alkyl or alkanoyl having 1 to 6 carbon atoms, and m is equal to 1 to 18.

European Patent Office

# EUROPEAN SEARCH REPORT

0143315

Application number

EP 84 11 2582

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | US-A-4 246 029 (A.SANDERS Jr)<br>* Abstract; column 4, line 59 - column 5, line 13; column 7, lines 1-13, 23-33 *<br>--- | 1,2,9 | C 09 G 1/16<br>C 08 L 83/08 |
| X | US-A-4 133 921 (J.PALCHER)<br>* Abstract; column 4, lines 34-42; column 4, lines 48-58 * | 1,2,9 | |
| A | * Column 5, lines 45-50 *<br>--- | 3,4 | |
| A,D | US-A-4 374 674 (B.ASHBY et al.)<br>* Abstract *<br>----- | 5 | |
| | | | TECHNICAL FIELDS SEARCHED (Int. Cl.4) |
| | | | C 09 G<br>C 08 L |

The present search report has been drawn up for all claims

| Place of search | Date of completion of the search | Examiner |
|---|---|---|
| THE HAGUE | 04-02-1985 | GIRARD |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82